# EUROPÄISCHE PATENTSCHRIFT

(11) **EP 3 807 608 B1**
(45) Veröffentlichungstag und Bekanntmachung des Hinweises auf die Patenterteilung: **26.07.2023**
(21) Anmeldenummer: 19726665.3
(22) Anmeldetag: 23.05.2019
(51) Int. Cl.: G01L 9/00, G01L 13/02, G01L 19/04, G01L 19/14, C04B 37/02, B23K 20/02, B23K 101/36, B23K 103/14, B23K 103/18, B23K 103/00, B23K 20/233

(54) **DRUCKMESSEINRICHTUNG UND VERFAHREN ZU DEREN HERSTELLUNG**
PRESSURE MEASURING DEVICE AND METHOD FOR PRODUCING SAME
DISPOSITIF DE MESURE DE PRESSION ET SON PROCÉDÉ DE FABRICATION

(30) Priorität: 14.06.2018 DE 102018114300
(43) Veröffentlichungstag der Anmeldung: 21.04.2021
(73) Patentinhaber: Endress+Hauser SE+Co. KG, 79689 Maulburg (DE)
(72) Erfinder: ROßBERG, Andreas, 79713 Bad Säckingen (DE); THAM, Anh Tuan, 14089 Berlin (DE); SCHMIDT, Elke, 79713 Bad Säckingen (DE); PONATH, Nils, 79539 Lörrach (DE); CONRADT, Jonas, 10829 Berlin (DE); WANG, Yanli, 79639 Grenzach-Wyhlen (DE); UEHLIN, Thomas, 79650 Schopfheim (DE)
(74) Vertreter: Laufer, Michael
(86) Internationale Anmeldenummer: PCT/EP2019/063406
(87) Internationale Veröffentlichungsnummer: WO 2019/238383

(56) Entgegenhaltungen:
- EP-A1- 2 860 505
- DE-A1-102011 004 729
- DE-B3-102016 204 511
- US-A- 5 750 899
- US-A1- 2004 012 942
- US-A1- 2008 110 269
- US-A1- 2017 030 787

## Beschreibung

Die Erfindung betrifft eine Druckmesseinrichtung mit
einem keramischen Drucksensor, der eine keramische Messmembran umfasst, und
einer Sensor-Befestigung, mittels der der Drucksensor derart befestigt ist, dass ein außenseitlich allseitig von einem Membranrand der Messmembran umgebener Membranbereich der Messmembran mit einem unter einem zu messenden Druck stehenden Medium beaufschlagbar ist,
wobei die Sensor-Befestigung ein Befestigungselement aus Titan oder einer Titanlegierung umfasst, das eine Öffnung aufweist, durch die hindurch der Membranbereich mit dem unter dem zu messenden Druck stehenden Medium beaufschlagbar ist,
sowie ein Verfahren zur Herstellung einer solchen Druckmesseinrichtung.

Druckmesseinrichtungen der eingangs genannten Art werden in der industriellen Messtechnik zur messtechnischen Erfassung von Drücken eingesetzt.

Drucksensoren werden entsprechend deren Abmessungen und der zu deren Herstellung verwendeten Verfahren regelmäßig in sogenannte klassische Sensoren und als Sensor-Chip ausgebildete Sensoren unterschieden.

Sensor-Chips sind als Mikro-Elektromechanische Systeme (MEMS) ausgebildete Sensoren, die üblicher Weise unter Verwendung von in der Halbleitertechnologie üblichen Verfahren, wie z.B. Ätzprozessen, Oxidationsverfahren, Implantationsverfahren, Bondverfahren und/oder Beschichtungsverfahren, unter Verwendung von ein oder mehrlagigen Wafern hergestellt werden. Als Sensor-Chip ausgebildete Drucksensoren weisen üblicher Weise Außenabmessungen von einem oder wenigen Millimetern auf und umfassen Messmembranen mit einer Membranstärke von wenigen Mikrometern.

Im Unterschied hierzu weisen klassische Drucksensoren üblicher Weise Außenabmessungen von mehreren Zentimetern auf und sind in der Regel Einzelanfertigungen. Dabei umfassen keramische Drucksensoren üblicher Weise eine Messmembran aus einer polykristallinen Keramik, die mittels einer Fügung, wie z.B. einer Aktivhartlötung, unter Einschluss einer Druckkammer mit einem in der Regel ebenfalls aus einer polykristallinen Keramik bestehenden Grundkörper verbunden ist. Diese Messmembranen weisen üblicher Weise eine Membranstärke von einem oder mehreren Millimetern auf.

Keramische Drucksensoren bieten den Vorteil, dass deren keramische Messmembran aufgrund der hohen mechanischen und chemischen Beständigkeit von Keramik unmittelbar einem unter einem zu messenden Druck stehenden Medium ausgesetzt werden kann. Keramische Drucksensoren können dementsprechend eingesetzt werden, ohne dass dem Drucksensor ein mit einer Druck übertragenden Flüssigkeit befüllter Druckmittler vorgeschaltet werden muss.

Hierzu werden klassische keramische Drucksensoren üblicher Weise mittels einer Sensor-Befestigung befestigt, die eine Einspannvorrichtung umfasst, in der ein äußerer Randbereich des Drucksensors in axialer, parallel zu einer Flächennormale auf die Messmembran verlaufender Richtung derart eingespannt ist, dass ein außenseitlich allseitig von einem in der Einspannvorrichtung eingespannten Membranrand der Membran umgebener Membranbereich durch eine Öffnung der Sensor-Befestigung hindurch mit dem unter dem zu messenden Druck stehenden Medium beaufschlagbar ist.

Beispiele hierzu sind z.B. in der DE 103 34 854 A1 und der DE 102 27 479 A1 beschrieben.

Bei diesen Druckmesseinrichtungen ist eine zwischen dem Membranrand und einem die Öffnung außenseitlich umgebenen Element der Einspannrichtung eingespannte Dichtvorrichtung erforderlich, die eine Abdichtung eines Gehäuseinnenraums der Druckmesseinrichtung gegenüber dem Medium bewirkt. Die in der DE 102 27 479 A1 beschriebene Druckmesseinrichtung umfasst hierzu einen zwischen dem Membranrand und dem Element der Einspannrichtung eingespannten O-Ring aus einem Elastomer. Die in der

DE 103 34 854 A1 beschriebene Druckmesseinrichtung umfasst hierzu einen zwischen dem Membranrand und dem Element der Einspannrichtung eingespannten keramischen Entkopplungsring, auf dessen dem Drucksensor zugewandten Stirnseite und auf dessen dem Element zugewandten Stirnseite jeweils eine Flachdichtung aus Polytetrafluorethylen (PTFE) angeordnet ist.

Zur Abdichtung des Gehäuseinnenraums einsetzbare Dichtungsmaterialien, wie z.B. Elastomere oder Thermoplaste, sind jedoch nicht diffusionsdicht und altern mit der Zeit.

Diesem Problem kann z.B. auf die in der EP 2 860 505 A1 beschriebene Weise begegnet werden. Dort ist eine Druckmesseinrichtung beschrieben mit
einem keramischen Drucksensor, der eine keramische Messmembran umfasst, und
einer Sensor-Befestigung, mittels der der Drucksensor derart befestigt ist, dass ein außenseitlich allseitig von einem Membranrand der Messmembran umgebener Membranbereich der Messmembran mit einem unter einem zu messenden Druck stehenden Medium beaufschlagbar ist,
wobei die Sensor-Befestigung ein Befestigungselement aus Titan oder einer Titanlegierung umfasst das eine Öffnung aufweist, durch die hindurch der Membranbereich mit dem unter dem zu messenden Druck stehenden Medium beaufschlagbar ist.

Die in der EP 2 860 505 A1 beschriebene Sensor-Befestigung umfasst einen Prozessanschluss aus Titan oder einer Titanlegierung, in dem eine Ausnehmung vorgesehen ist, in der der Drucksensor mittels einer Befestigungsanordnung befestigt ist. Die Befestigungsanordnung umfasst einen mittels einer Lötung mit dem Membranrand verbundenen Keramikring und das mit dem Keramikring verbundene Befestigungselement aus Titan. Das Befestigungselement ist als Metallring ausgebildet, der mittels einer Schweißung mit dem Prozessanschluss verbunden ist. Der Metallring kann als den Keramikring außenseitlich allseitig umgebender, auf den Keramikring aufgeschrumpfter Ring ausgebildet sein. Alternativ kann der Metallring als ein mittels einer Lötung mit einer von der Messmembran abgewandten Stirnseite des Keramikrings verbundener Ring ausgebildet sein. Bei beiden Varianten bildet die Befestigungsanordnung eine außenseitliche Begrenzung der zur Druckbeaufschlagung dienenden Öffnung, die gegenüber dem Innenraum der Ausnehmung durch die Lötung zwischen Membranrand und Keramikring und die Verbindung zwischen dem Metallring und dem Keramikring diffusionsdicht abgeschlossen ist.

Nachteilig ist hier jedoch, dass im Messbetrieb mit dem Medium in Kontakt gelangende Lötungen durch Korrosion angegriffen werden können. Diese Druckmesseinrichtung kann somit nicht zur Druckmessung von in hohem Maße korrosiven Medien, wie z.B. oxidierenden Mineralsäuren, eingesetzt werden.

In der EP 1 329 960 A1 ist ein Drucksensor beschrieben, der einen Sensor-Chip aus Saphir umfasst. Saphir ist ein monokristalliner, korrosionsbeständiger Werkstoff. Der Sensor-Chip ist in einer Ausnehmung in einem Glaskörper angeordnet, die stirnseitig durch eine Abdeckplatte aus Saphir verschlossen ist. Die Abdeckplatte weist eine zentrale Öffnung auf, durch die hindurch eine Saphir-Membran des Sensor-Chips mit Druck beaufschlagbar ist.

In der EP 1 329 960 A1 wird erwähnt, dass die Abdeckplatte mit dem Chip auf korrosionsbeständige Weise ohne Zwischenfügung eines Fügemittels verbunden werden kann, indem deren Oberflächen spiegelglatt geschliffen werden und Chip und Abdeckplatte nachfolgend dadurch miteinander verbunden werden, dass sie unter einem darauf ausgeübten Anpressdruck aufgeheizt werden. Von dieser Ausführungsform wird jedoch in der
EP 1 329 960 A1 abgeraten, da Saphir bereits für sich genommen ein teurer Werkstoff ist, und sich die Herstellungskosten zusätzlich dadurch erhöhen, dass es zur Erzeugung der Verbindung zwischen Sensor-Chip und Abdeckplatte erforderlich ist, dass die Oberflächen eine Oberflächenrauigkeit von kleiner gleich 0,3 nm aufweisen.

Darüber hinaus steht zu befürchten, dass sich die Messeigenschaften des Sensor-Chips durch den darauf ausgeübten Anpressdruck verschlechtern und/oder durch den Anpressdruck Spannungen in den Sensor-Chip induziert werden, die sich nachteilig auf die Messgenauigkeit auswirken können. Dabei ist Saphir als starrer, spröder Werkstoff von Sensor und Abdeckplatte gar nicht oder nur in sehr geringem Maße in der Lage diese Spannungen auszugleichen, da der einkristalline Saphir im Gegensatz zu einer Keramik keine Korngrenzen besitzt, an denen unterkritisches Risswachstum gestoppt werden kann.

Aufgrund der eingangs genannten Unterschiede zwischen klassischen Drucksensoren und Sensor-Chips sind zur Kapselung von Sensor-Chips einsetzbare Verfahren in der Regel nicht ohne Weiteres auf Sensor-Befestigungen zur Befestigung von klassischen Drucksensoren übertragbar.

Außerdem werden in klassischen keramischen Drucksensoren heute üblicher Weise im Vergleich zu Saphir-Membranen deutlich kostengünstigere polykristalline keramische Membranen eingesetzt. Polykristalline Keramiken weisen jedoch eine deutlich schlechtere Oberflächenqualität und eine deutlich größere Oberflächenrauigkeit auf als Saphir. Damit erscheint es äußerst schwierig polykristalline keramische Membranen mit einer Oberflächenrauigkeit von kleiner gleich 0,3 nm zu erzeugen. Der Einsatz von Saphir-Membranen würde jedoch aufgrund der im Vergleich zu Sensor-Chips sehr großen Abmessungen klassischer Drucksensoren einen erheblichen Kostenanstieg bedeuten.

Auch Überlegungen, eine an sich für die Durchführung des in der
EP 1 329 960 A1 beschriebenen Verfahrens zu große Oberflächenrauigkeit durch eine Erhöhung der Temperatur oder des Anpressdrucks zu kompensieren, helfen hier nicht weiter, da der keramische Drucksensor hierdurch noch größeren thermomechanischen Belastungen ausgesetzt sein würde, die sich nachteilig auf die Messgenauigkeit auswirken oder sogar zur Zerstörung des Sensors führen könnten.

Aus der DE 10 2016 204511 B3 ist ferner ein Druckmessgerät zur Erfassung des Drucks eines Mediums innerhalb eines Behälters oder einer Rohrleitung bekannt geworden, bei dem ein Haltelement mit einem Grundflächenabschnitt und einem dazu umgebogenen Außenbereichsabschnitt kappenartig ausgebildet und über eine
dem Medium zugewandten Stirnseite eines Prozessanschlusses gestülpt ist.

Es ist eine Aufgabe der Erfindung, die Korrosionsbeständigkeit von mit einem klassischen keramischen Drucksensor ausgestatteten Druckmesseinrichtungen der eingangs genannten Art zu verbessern.

Zur Lösung dieser Aufgabe umfasst die Erfindung eine Druckmesseinrichtung
mit
einem keramischen Drucksensor, der eine keramische Messmembran umfasst, und
einer Sensor-Befestigung, mittels der der Drucksensor derart befestigt ist, dass ein außenseitlich allseitig von einem Membranrand der Messmembran umgebener Membranbereich der Messmembran mit einem unter einem zu messenden Druck stehenden Medium beaufschlagbar ist,
wobei die Sensor-Befestigung ein Befestigungselement aus Titan oder einer Titanlegierung umfasst, das eine Öffnung aufweist, durch die hindurch der Membranbereich mit dem unter dem zu messenden Druck stehenden Medium beaufschlagbar ist,
die sich dadurch auszeichnet, dass
der Membranrand der Messmembran mittels einer Diffusionsschweißung unmittelbar mit dem Befestigungselement der Sensor-Befestigung verbunden ist,
wobei die Diffusionsschweißung eine mittels eines Diffusionsschweißverfahrens erzeugte Diffusionsschweißung ist, durch das die während des Diffusionsschweißverfahrens als Einzelteil vorliegende Messmembran mit dem Befestigungselement verbunden wurde.

Erfindungsgemäße Druckmesseinrichtungen bieten den Vorteil, dass über die die Diffusionsschweißung eine diffusionsdichte und in hohem Maße korrosionsbeständige Abdichtung der Öffnung erzielt wird. Das ist insb. auch dann noch der Fall, wenn die Messmembran eine vergleichsweise raue Oberfläche aufweist. Dabei wird durch die hier erfindungsgemäß ohne Zwischenfügung eines Fügematerials, ohne Zwischenfügung einer Dichtung aus einem Elastomer oder einem Thermoplast und ohne Zwischenfügung eines keramischen Bauteils durch die Diffusionsschweißung bewirkte unmittelbare Verbindung zwischen dem Membranrand und dem Befestigungselement erreicht, dass die Korrosionsbeständigkeit der Verbindung insgesamt im Wesentlichen lediglich durch die sehr hohe Korrosionsbeständigkeit der Messmembran und des Befestigungselements begrenzt ist. Ein weiterer Vorteil besteht darin, dass die Diffusionsschweißung eine vergleichsweise hohe Druckfestigkeit aufweist. Diese hohe Druckfestigkeit wird insb. dadurch erzielt, dass die Messmembran zunächst als Einzelteil mit dem Befestigungselement verschweißt wird. Das bietet den weiteren Vorteil, dass der Drucksensor nicht als Ganzes den zur Ausführung eines Diffusionsschweißverfahrens erforderlichen Belastungen ausgesetzt wird. Damit können auch Drucksensoren eingesetzt werden, die diesen Belastungen nicht standhalten können. Darüber hinaus wird hierdurch vermieden, dass sich die Messeigenschaften des Drucksensors durch die mit dem Diffusionsschweißverfahrens verbundenen Belastungen verschlechtern.

Eine erste Weiterbildung erfindungsgemäßer Druckmesseinrichtungen zeichnet sich dadurch aus, dass der Drucksensor mindestens einen auf der von der Diffusionsschweißung abgewandten Seite der Messmembran angeordneten Sensorbestandteil umfasst.

Eine erste Variante erfindungsgemäßer Druckmesseinrichtungen zeichnet sich dadurch aus, dass der Drucksensor als freistehendes, ausschließlich mittels der Diffusionsschweißung befestigtes Bauteil ausgebildet ist.

Eine zweite Variante erfindungsgemäßer Druckmesseinrichtungen zeichnet sich dadurch aus, dass die Sensor-Befestigung eine auf einer von der Diffusionsschweißung abgewandten Rückseite des Drucksensors angeordnete Sensorabstützung umfasst, die derart ausgebildet ist, dass sie eine rückseitige Abstützung des Drucksensors bewirkt, durch die sich die Druckbeständigkeit der Sensor-Befestigung gegenüber durch die Öffnung hindurch auf die Stirnseite des Drucksensors ausgeübten Druckbelastungen erhöht.

Eine zweite Weiterbildung erfindungsgemäßer Druckmesseinrichtungen zeichnet sich dadurch aus, dass
die Messmembran aus einer polykristallinen Keramik, einer polykristallinen Oxidkeramik oder aus polykristallinem Aluminiumoxid (Al₂O₃) besteht, eine Oberflächenrauigkeit von größer gleich 0,1 µm aufweist, eine Membranstärke von 0,05 mm bis 3 mm aufweist, und/oder einen Membrandurchmesser von größer gleich 17 mm aufweist, und/oder
das Befestigungselement aus Titan besteht oder aus einer Titanlegierung besteht, wobei die Titanlegierung an einen an einen thermischen Ausdehnungskoeffizienten der Keramik der Messmembran angepassten thermischen Ausdehnungskoeffizienten aufweist und/oder einen Elastizitätsmodul von 100 GPa bis 120 GPa aufweist.

Eine dritte Weiterbildung erfindungsgemäßer Druckmesseinrichtungen zeichnet sich dadurch aus, dass
das Befestigungselement eine Ausnehmung umfasst, die außenseitlich allseitig von einem den Drucksensor außenseitlich allseitig umgebenden, von dem Drucksensor beabstandeten Wandbereich begrenzt ist,
an den Wandbereich endseitig eine sich radial nach innen erstreckende Schulter anschließt, die die Öffnung des Befestigungselements außenseitlich allseitig umgibt, und
der Membranrand der Messmembran mittels der Diffusionsschweißung mit einem von dem Wandbereich beabstandeten, inneren Randbereich der Schulter des Befestigungselements verbunden ist.

Eine vierte Weiterbildung zeichnet sich dadurch aus, dass die Druckmesseinrichtung einen als Bestandteil des Befestigungselements ausgebildeten Prozessanschluss oder einen als separates Bauteil ausgebildeten, mit dem Befestigungselement verbundenen oder mit dem Befestigungselement mittels einer Schweißung verbundenen Prozessanschluss umfasst, mittels dessen die Druckmesseinrichtung auf einem hierzu komplementären Anschluss montierbar und/oder an einen hierzu komplementären Anschluss einer Wirkdruckleitung anschließbar ist.

Eine erste Ausgestaltung zeichnet sich dadurch aus, dass
der Drucksensor einen elektromechanischen Wandler umfasst, der dazu ausgestaltet ist, eine vom auf die Messmembran einwirkenden Druck abhängige Durchbiegung der Messmembran in eine elektrische Größe umzuwandeln, anhand derer dann mittels einer an den Wandler angeschlossenen oder anschließbaren Messelektronik der zu messende Druck bestimmbar ist.

Eine zweite Ausgestaltung zeichnet sich dadurch aus, dass
der Drucksensor einen Grundkörper umfasst, der mittels einer Fügung unter Einschluss einer Druckkammer mit der Messmembran verbunden ist.

Des Weiteren umfasst die Erfindung ein Verfahren zur Herstellung einer erfindungsgemäßen Druckmesseinrichtung, das sich dadurch auszeichnet, dass
die Messmembran und das Befestigungselement oder zumindest ein durch die Diffusionsschweißung mit der Messmembran zu verbindender Teil des Befestigungselements als Einzelteile vorgefertigt werden, und
ein Diffusionsschweißverfahren ausgeführt wird, mittels dessen der Membranrand der als Einzelteil vorliegenden Messmembran mit einem damit durch die Diffusionsschweißung zu verbindenden Bereich des Befestigungselements verbunden wird, indem
   a) eine Anordnung erzeugt wird, in der der Membranrand und der damit durch die Diffusionsschweißung zu verbindende Bereich des Befestigungselements unmittelbar aufeinander aufliegen, und
   b) der Membranrand und der damit zu verbindende Bereich des Befestigungselements unter Vakuum oder unter einer Schutzgasatmosphäre mittels eines Anpressdrucks gegeneinander gepresst werden und unter dem darauf einwirkenden Anpressdruck einem Temperaturprozess unterzogen werden, bei dem die Anordnung auf eine Temperatur erwärmt wird, bei der ein die Diffusionsschweißung bewirkender Diffusionsprozess stattfindet.

Eine erste Weiterbildung des Verfahren zeichnet sich dadurch aus, dass die Anordnung während des Diffusionsschweißverfahrens über einen Zeitraum von 60 Minuten bis 120 Minuten unter einem Anpressdruck von 1 MPa bis 10 MPa auf einer Temperatur im Bereich von 1000 °C bis 1400 °C gehalten wird.

Eine zweite Weiterbildung des Verfahren zeichnet sich dadurch aus, dass der Drucksensor im Anschluss an das Diffusionsschweißverfahren durch Hinzufügen mindestens eines auf der von der Diffusionsschweißung abgewandten Seite der Messmembran anzuordnenden Sensorbestandteils vervollständigt wird.

Eine Weiterbildung der zweiten Weiterbildung des Verfahrens zur Herstellung einer Druckmesseinrichtung gemäß der zweiten Ausgestaltung zeichnet sich dadurch aus, dass
der Grundkörper nach der Ausführung des Diffusionsschweißverfahrens unter Zwischenfügung eines zur Erzeugung der Fügung zwischen Messmembran und Grundkörper benötigten Fügematerials auf der Messmembran angeordnet wird, und
nachfolgend ein Fügeverfahren ausgeführt wird, mittels dessen die Fügung zwischen Grundkörper und Messmembran erzeugt wird.

Eine Weiterbildung der letztgenannten Weiterbildung zeichnet sich dadurch aus, dass
der Drucksensor einen kapazitiven elektromechanischen Wandler umfasst,
der Wandler eine auf einer membran-zugewandten Stirnseite des Grundkörpers angeordnete Messelektrode und eine auf einer dem Grundkörper zugewandten Innenseite der Messmembran angeordnete Gegenelektrode umfasst,
die Gegenelektrode auf die Messmembran aufgebracht wird, bevor Messmembran und Grundkörper mittels des Fügeverfahrens miteinander verbunden werden, und
der Grundkörper mit der Messelektrode und für den elektrischen Anschluss des Wandlers an eine Messelektronik benötigten Komponenten ausgestattet wird, bevor der Grundkörper mittels des Fügeverfahrens mit der Messmembran verbunden wird.

Die Erfindung und deren Vorteile werden nun anhand der Figuren der Zeichnung, in denen zwei Ausführungsbeispiele dargestellt sind, näher erläutert. Gleiche Elemente sind in den Figuren mit den gleichen Bezugszeichen versehen. Um Elemente sehr unterschiedlicher Abmessungen darstellen zu können, wurde eine nicht immer maßstabsgetreue Darstellung gewählt.
- Fig. 1 zeigt:: ein Beispiel einer Druckmesseinrichtung, deren Befestigungselement einen Prozessanschluss umfasst;
- Fig. 2 zeigt:: ein Beispiel einer Druckmesseinrichtung, deren Befestigungselement mit einem separaten Prozessanschluss verbunden ist; und
- Fig. 3 zeigt:: Verfahrensschritte zur Herstellung einer Druckmesseinrichtung am Beispiel der Druckmesseinrichtung von Fig. 1.

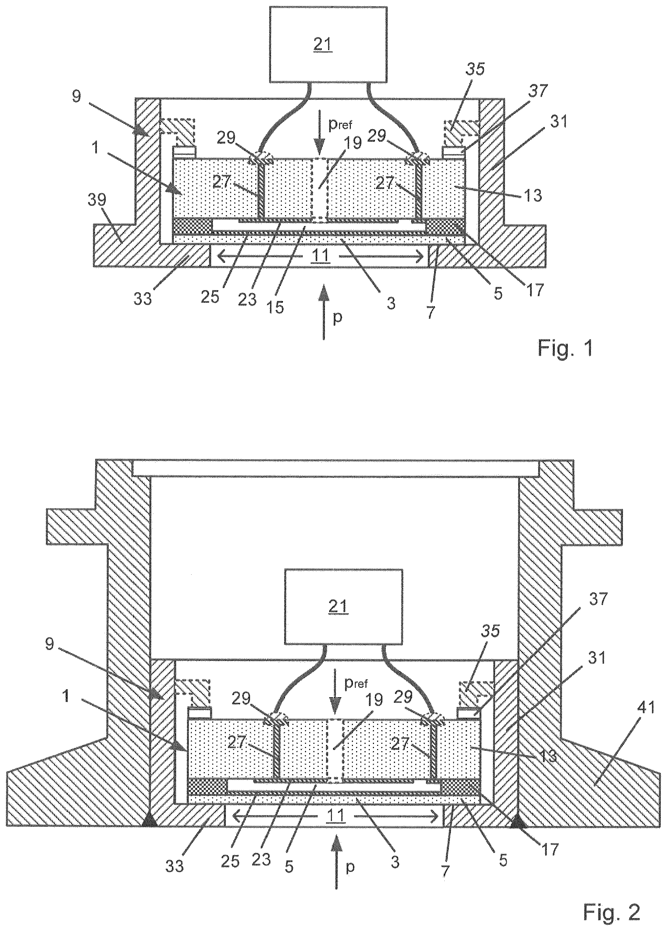

Fig. 1 und 2 zeigen jeweils ein Beispiel einer erfindungsgemäßen Druckmesseinrichtung. Diese umfassen jeweils einen Drucksensor 1 und eine Sensor-Befestigung. Der Drucksensor 1 umfasst eine keramische Messmembran 3 und ist mittels der Sensor-Befestigung derart befestigt, dass ein außenseitlich allseitig von einem Membranrand 5 der Messmembran 3 umgebener Membranbereich der Messmembran 3 mit einem unter einem zu messenden Druck p stehenden Medium beaufschlagbar ist.

Erfindungsgemäße Druckmesseinrichtungen zeichnen sich dadurch aus, dass der Membranrand 5 der Messmembran 3 mittels einer Diffusionsschweißung 7 unmittelbar mit einem Befestigungselement 9 der Sensor-Befestigung verbunden ist, das eine den Membranbereich freilegende Öffnung 11 aufweist, durch die hindurch der Membranbereich mit dem zu messenden Druck p beaufschlagbar ist. Dabei ist die Diffusionsschweißung 7 als eine mittels eines Diffusionsschweißverfahrens erzeugte Diffusionsschweißung 7 ausgebildet, durch das die während des Diffusionsschweißverfahrens als Einzelteil vorliegende Messmembran 3 mit dem Befestigungselement 9 verbunden wurde, wobei das Befestigungselement 9 aus Titan oder aus einer Titanlegierung besteht. Als Titanlegierung eignen sich insb. Titanlegierungen, die einen an einen thermischen Ausdehnungskoeffizienten der Keramik der Messmembran 3 angepassten thermischen Ausdehnungskoeffizienten aufweisen. Im Hinblick auf die Erzeugung der Diffusionsschweißung 7 sind Titanlegierungen besonders geeignet, die - wie Titan auch - einen vergleichsweise kleinen Elastizitätsmodul von 100 GPa bis 120 GPa aufweisen. Beispiele hierfür sind Ti 6Al 4V, sowie Ti 6Al 2Sn 4Zr 6Mo.

Die Erfindung weist die eingangs genannten Vorteile auf. Darüber hinaus bieten die vorgenannten Titan umfassenden Werkstoffe den Vorteil, dass der thermische Ausdehnungskoeffizient des hieraus bestehenden Befestigungselements 9 dem thermischen Ausdehnungskoeffizienten von üblicher Weise zur Herstellung von keramischen Messmembranen 3 verwendeten polykristallinen Keramiken, wie z.B. Oxidkeramiken, wie z.B. Aluminiumoxid (Al₂O₃), sehr ähnlich ist, so dass im Messbetrieb sowohl auf die Diffusionsschweißung 7 einwirkende als auch über die Diffusionsschweißung auf die Messmembran 3 übertragbare thermomechanische Spannungen vergleichsweise gering sind. Darüber hinaus bieten die vorgenannten Titan umfassenden Werkstoffe den Vorteil, dass sie sehr viel elastischer sind als Keramik oder Saphir und somit in der Lage sind, auf Temperaturänderungen, denen die Druckmesseinrichtung im Einsatz ausgesetzt ist, zurückzuführende thermomechanischen Spannungen zumindest teilweise zu absorbieren.

Einzelne Bestandteile erfindungsgemäßer Druckmesseinrichtungen können unterschiedliche einzeln oder in Kombination miteinander einsetzbare Ausgestaltungen aufweisen. Beispiele hierzu sind nachfolgend anhand der Figuren beschrieben.

So kann die Messmembran 3 z.B. aus einer polykristallinen Keramik, einer polykristallinen Oxidkeramik oder aus polykristallinem Aluminiumoxid (Al₂O₃) bestehen, eine Oberflächenrauigkeit von größer gleich 0,1 µm aufweisen, eine Membranstärke von 0,05 mm bis 3 mm aufweisen, und/oder einen Membrandurchmesser von größer gleich 17 mm aufweisen.

Alternativ oder zusätzlich hierzu kann der Drucksensor 1 zusätzlich zu der Messmembran 3 mindestens einen auf der von der Diffusionsschweißung 7 abgewandten Seite der Messmembran 3 angeordneten Sensorbestandteil umfassen. Diese Sensorbestandteile können z.B. einen in Fig. 1 und 2 dargestellten Grundkörper 13 umfassen, der mit der Messmembran 3 unter Einschluss einer Druckkammer 15 druckdicht verbunden ist. Als Verbindung eignet sich z.B. eine einen äußeren Rand der Messmembran 3 mit einem äußeren Rand des Grundkörpers 13 verbindende, die Druckkammer 15 außenseitlich allseitig umgebenden Fügung 17. Besteht der Grundkörper 13 ebenfalls aus Keramik, z.B. aus einer Oxidkeramik, wie z.B. Aluminiumoxid (Al₂O₃), so eignet sich als Fügung 17 z.B. eine Aktivhartlötung.

Der Drucksensor 1 kann z.B. als Absolutdrucksensor ausgebildet sein, der einen auf eine Außenseite der Messmembran 3 einwirkenden Druck p messtechnisch erfasst. In dem Fall ist die unter der Messmembran 3 eingeschlossene Druckkammer 15 evakuiert. Alternativ kann der Drucksensor 1 als Relativdrucksensor ausgebildet sein, der einen auf die Außenseite der Messmembran 3 einwirkenden Druck p bezogen auf einen der Druckkammer 15 über eine durch den Grundkörper 13 hindurch verlaufende, in Fig. 1 und 2 als Alternative gestrichelt gezeichnete Referenzdruckzuleitung 19 zugeführten Referenzdruck p_{ref} erfasst.

Die dargestellten Drucksensoren 1 umfassen jeweils einen elektromechanischen Wandler, der dazu ausgestaltet ist, eine vom auf die Messmembran 3 einwirkenden Druck p abhängige Durchbiegung der Messmembran 3 in eine elektrische Größe umzuwandeln, anhand derer dann mittels einer an den Wandler angeschlossenen Messelektronik 21 der zu messende Druck p bestimmt wird. Der in Fig. 1 und 2 als Beispiel dargestellte kapazitive Wandler umfasst hierzu einen Messkondensator mit einer von der druckabhängigen Durchbiegung der Messmembran 3 abhängigen Messkapazität, der eine auf einer membran-zugewandten Stirnseite des Grundkörpers 13 angeordnete Messelektrode 23 und eine auf einer dem Grundkörper 13 zugewandten Innenseite der Messmembran 9 angeordnete Gegenelektrode 25 umfasst.

Bei dem hier dargestellten Beispiel ist die Messelektrode 23 über einen durch den Grundkörper 13 hindurch verlaufenden Kontaktstift 27 mit einem auf der membran-abgewandten Stirnseite des Grundkörpers 13 angeordneten Anschluss 29 verbunden, über den die Messelektrode 23 an die Messelektronik 21 anschließbar oder angeschlossen ist. Die Gegenelektrode 25 ist über die daran angrenzende, elektrisch leitfähige Fügung 17 und einen elektrisch leitend mit der Fügung 17 verbundenen, durch den Grundkörper 13 hindurch verlaufenden Kontaktstift 27 mit einem auf der membran-abgewandten Stirnseite des Grundkörpers 13 angeordneten Anschluss 29 verbunden, über den die Gegenelektrode 25 an die Messelektronik 21 anschließbar oder angeschlossen ist.

Alternativ können anstelle der hier dargestellten Drucksensoren 1 natürlich auch andere aus dem Stand der Technik bekannte Drucksensoren eingesetzt werden, die eine keramische Messmembran aufweisen. Diese Sensoren können z.B. einen anderen mechanischen Aufbau aufweisen, auf andere Weise elektrisch anschließbar sein und/oder einen nach einem Wandlerprinzip arbeitenden elektromechanischen Wandler, wie z.B. einen optischen oder einen piezoresistiven Wandler, umfassen.

Die Formgebung des Befestigungselements 9 ist innerhalb vergleichsweise weiter Grenzen frei wählbar. Fig. 1 und 2 zeigen hierzu Ausführungsbeispiele, bei denen das Befestigungselement 9 eine Ausnehmung umfasst, die außenseitlich allseitig von einem den Drucksensor 1 außenseitlich allseitig umgebenden, von dem Drucksensor 1 beabstandeten Wandbereich 31 begrenzt ist, an den endseitig eine sich radial nach innen erstreckende Schulter 33 anschließt, die die zur Druckbeaufschlagung der Messmembran 3 dienende Öffnung 11 des Befestigungselements 9 außenseitlich allseitig umgibt. Dabei ist der Membranrand 5 der Messmembran 3 mittels der Diffusionsschweißung 7 mit einem von dem Wandbereich 31 beabstandeten, inneren Randbereich der Schulter 33 des Befestigungselements 9 verbunden.

Wie bereits erwähnt, weist die durch die Diffusionsschweißung 7 gebildete Verbindung zwischen Messmembran 3 und Befestigungselement 9 eine vergleichsweise hohe Druckfestigkeit auf. Diese Druckfestigkeit ist bei zur Messung sehr kleiner Drücke oder zur Messungen von Unterdrücken eingesetzten Druckmesseinrichtungen bereits ausreichend, um eine in ausreichendem Maße druckfeste Befestigung des Drucksensors 1 in der Druckmesseinrichtung zu bewirken. In diesen Anwendungen kann der Drucksensor 1 als freistehendes, ausschließlich mittels der Diffusionsschweißung 7 befestigter Drucksensor 1 ausgebildet sein.

Eine gegebenenfalls gewünschte oder aufgrund des Druckmessbereichs der Druckmesseinrichtung erforderliche, über die durch die Druckfestigkeit der Diffusionsschweißung 7 hinaus gehende Druckfestigkeit der Sensor-Befestigung kann optional dadurch bewirkt werden, dass die Sensor-Befestigung eine auf einer von der Diffusionsschweißung 7 abgewandten Rückseite des Drucksensors 1 angeordnete Sensorabstützung 35 umfasst. Die Sensorabstützung 35 bewirkt eine rückseitige Abstützung des Drucksensors 1, durch die sich die Druckbeständigkeit der Sensor-Befestigung gegenüber durch die Öffnung 11 hindurch auf die Stirnseite des Drucksensors 1 ausgeübten Druckbelastungen erhöht. Auf diese Weise können mit erfindungsgemäßen Druckmesseinrichtungen auch vergleichsweise große Drücke p, wie z.B. Drücke p von bis zu 60 bar oder sogar darüber, gemessen werden. Fig. 1 und 2 zeigen ein Beispiel einer als Option gestrichelt dargestellte Sensorabstützung 35, die einen von der von der Öffnung 11 abgewandten Seite her in das Befestigungselement 9 eingesetzten, mit dem Befestigungselement 9 verbunden Druckring umfasst, der auf einen äußeren Rand der Rückseite des Drucksensors 1 einwirkt. Dieser Druckring besteht vorzugsweise aus dem gleichen Werkstoff wie das Befestigungselement 9 und kann mit dem Befestigungselement 9, z.B. durch eine Schweißung oder eine Schraubverbindung, verbunden sein. Optional kann zwischen der Sensorabstützung 35 und dem äußeren Rand der Rückseite des Drucksensors 1 mindestens ein weiteres Element 37, wie z.B. eine Dichtung, ein keramischer Entkopplungsring und/oder ein federelastisches Element, eingespannt sein.

Darüber hinaus umfassen erfindungsgemäße Druckmesseinrichtungen vorzugsweise einen Prozessanschluss 39, 41, mittels dessen die Druckmesseinrichtung auf einem hierzu komplementären, an einem Einsatzort vorgesehenen Anschluss montierbar und/oder an einen hierzu komplementären Anschluss einer Wirkdruckleitung anschließbar ist.

Fig. 1 zeigt hierzu ein Beispiel, bei dem der Prozessanschluss 39 als Bestandteil des Befestigungselements 9 ausgebildet ist. Fig. 2 zeigt ein Beispiel, bei dem der Prozessanschluss 41 als separates, mit dem Befestigungselement 9 verbundenes Bauteil ausgebildet ist. Dort ist das mit dem Drucksensor 1 verbundene Befestigungselement 9 im Wesentlichen frontbündig in den Prozessanschluss 41 eingesetzt.

Die hier dargestellten Prozessanschlüsse 39, 41 umfassen jeweils einen Flansch, der mit einem hierzu komplementären Gegenflansch verbindbar ist. Alternativ können natürlich anstelle der hier dargestellten Flansche auch andere aus dem Stand der Technik bekannte Prozessanschlussarten, wie z.B. Anschlussgewinde, eingesetzt werden.

Bei Druckmesseinrichtungen mit separatem Prozessanschluss 41 besteht der Prozessanschluss 41 vorzugsweise aus Metall, z.B. aus einem Edelstahl, und ist mit dem Befestigungselement 9 vorzugsweise durch eine metallische Verbindung, wie z.B. die in Fig. 2 durch Dreiecke dargestellte Schweißung, verbunden.

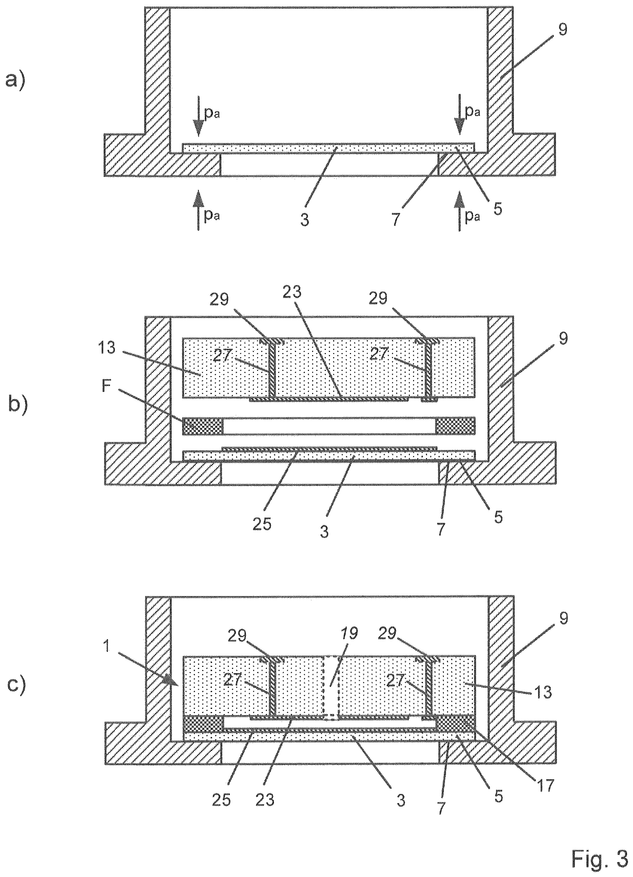

Fig. 3 zeigt Verfahrensschritte zur Herstellung einer erfindungsgemäßen Druckmesseinrichtung am Beispiel der in Fig. 1 dargestellten Druckmesseinrichtung. Bei der Herstellung werden die Messmembran 3 und das Befestigungselement 9 oder zumindest ein durch die Diffusionsschweißung 7 mit der Messmembran 3 zu verbindender Teil des Befestigungselements 9 als Einzelteile vorgefertigt. Anschließend wird ein Diffusionsschweißverfahren ausgeführt, mittels dessen die als Einzelteil vorliegende Messmembran 3 mit dem Befestigungselement 9 verbunden wird. Hierzu wird vorzugsweise derart verfahren, dass eine in Fig. 3a dargestellte Anordnung erzeugt wird, in der der Membranrand 5 und der damit durch die Diffusionsschweißung 7 zu verbindende Bereich des Befestigungselements 9 unmittelbar aufeinander aufliegen. Anschließend werden der Membranrand 5 und der damit zu verbindende Bereich des Befestigungselements 9 unter Vakuum oder unter einer Schutzgasatmosphäre mittels eines Anpressdruck pₐ gegeneinander gepresst und unter dem darauf einwirkenden Anpressdruck pₐ einem Temperaturprozess unterzogen, bei dem die Anordnung auf eine Temperatur erwärmt wird, bei der ein die Diffusionsschweißung 7 bewirkender Diffusionsprozess stattfindet.

Dabei stellen die Temperatur, der Anpressdruck pₐ und ein Zeitraum, über den die Anordnung der Temperatur und dem Anpressdruck pₐ ausgesetzt ist, Prozessparameter dar, die in Abstimmung aufeinander innerhalb gewisser Grenzen einstellbar sind. Da die Messmembran 3 als Einzelteil diffusionsgeschweißt wird, braucht hierbei keine Rücksicht auf die thermische und mechanische Belastbarkeit des Drucksensors 1 genommen werden, die je nach Aufbau des Drucksensors 1 sehr viel geringer als die der Messmembran 3 ist. Als besonders geeignet wird derzeit ein Diffusionsschweißverfahren angesehen, bei dem die Anordnung über einen Zeitraum von 60 Minuten bis 120 Minuten unter einem Anpressdruck von 1 MPa bis 10 MPa auf einer Temperatur im Bereich von 1000 °C bis 1400 °C gehalten wird.

Mittels des zuvor beschriebenen Verfahrens lassen sich Diffusionsschweißungen 7 zwischen Messmembranen 3 aus polykristalliner Keramik, wie z.B. Oxidkeramik, wie z.B. Aluminiumoxid (Al₂O₃), und dem Befestigungselements 9 aus Titan erzeugen, die eine Heliumleckdichtheit von kleiner gleich 1.10⁻¹⁰ mbar·l·s⁻¹ aufweisen.

Umfasst der Drucksensor 1 zusätzlich zu der Messmembran 3 mindestens einen weiteren auf der von der Diffusionsschweißung 7 abgewandten Seite der Messmembran 3 angeordneten Sensorbestandteil, so wird der Drucksensor 1 im Anschluss an das Diffusionsschweißverfahren durch Hinzufügen dieser Sensorbestandteile vervollständigt. Die nachträgliche Vervollständigung bietet den Vorteil, dass weder die Sensorbestandteile noch deren Verbindungen untereinander und/oder zur Messmembran den mit dem Diffusionsschweißverfahren verbundenen Belastungen ausgesetzt werden, so dass die auf diese Weise hergestellten Drucksensoren 1 vergleichsweise geringe intrinsische Spannungen enthalten und eine dementsprechend hohe Messgenauigkeit aufweisen.

In Verbindung mit den in Fig. 1 und 2 dargestellten Drucksensoren 1 wird hierzu vorzugsweise derart verfahren, dass der Grundkörper 13 unter Zwischenfügung eines zur Erzeugung der Fügung 17 zwischen Messmembran 3 und Grundkörper 13 benötigten Fügematerials F auf die in der in Fig. 3 b) gezeigten Explosionsdarstellung dargestellten Weise auf der Messmembran 3 angeordnet wird. Als Fügematerial F eignet sich insb. ein Aktivhartlot, das beispielsweise in Form eines Rings zwischen Messmembran 3 und Grundkörper 13 angeordnet werden kann. Nachfolgend wird ein Fügeverfahren, z.B. ein Aktivhartlötverfahren, ausgeführt, mittels dessen dann die in Fig. 3c dargestellte Fügung 17 zwischen Grundkörper 13 und Messmembran 3 erzeugt wird.

Wie aus Fig. 3 b) ersichtlich, wird bei der Herstellung von Druckmesseinrichtungen, deren Drucksensor 1 als kapazitiver Drucksensor 1 ausgebildet ist, vorzugsweise derart verfahren, dass die Gegenelektrode 25 auf die Messmembran 3 aufgebracht, z.B. als metallische Beschichtung aufgesputtert, wird, bevor Messmembran 3 und Grundkörper 13 miteinander verbunden werden. Dabei wird die Gegenelektrode 25 vorzugsweise nach der Ausführung des Diffusionsschweißverfahrens aufgebracht. Alternativ wäre es aber auch denkbar, die Gegenelektrode 25 bereits vor der Ausführung des Diffusionsschweißverfahrens aufzubringen.

Zusätzlich wird bei der Vervollständigung kapazitiver Drucksensoren 1 vorzugsweise derart verfahren, dass der Grundkörper 13 mit der Messelektrode 23 und ggfs. für den elektrischen Anschluss des Wandlers an die Messelektronik 21 benötigten Komponenten, wie z.B. den hier dargestellten Kontaktstiften 27 und Anschlüssen 29, ausgestattet wird, bevor der Grundkörper 13 mittels des Fügeverfahrens mit der Messmembran 3 verbunden wird.

## Patentansprüche

1. Druckmesseinrichtung mit
einem keramischen Drucksensor (1), der eine keramische Messmembran (3) umfasst, und
einer Sensor-Befestigung, mittels der der Drucksensor (1) derart befestigt ist, dass ein außenseitlich allseitig von einem Membranrand (5) der Messmembran (3) umgebener Membranbereich der Messmembran (3) mit einem unter einem zu messenden Druck (p) stehenden Medium beaufschlagbar ist,
wobei die Sensor-Befestigung ein Befestigungselement (9) aus Titan oder einer Titanlegierung umfasst, das eine Öffnung (11) aufweist, durch die hindurch der Membranbereich mit dem unter dem zu messenden Druck (p) stehenden Medium beaufschlagbar ist,
**dadurch gekennzeichnet, dass**
der Membranrand (5) der Messmembran (3) mittels einer Diffusionsschweißung (7) unmittelbar mit dem Befestigungselement (9) der Sensor-Befestigung verbunden ist,
wobei die Diffusionsschweißung (7) eine mittels eines Diffusionsschweißverfahrens erzeugte Diffusionsschweißung (7) ist, durch das die während des Diffusionsschweißverfahrens als Einzelteil vorliegende Messmembran (3) mit dem Befestigungselement (9) verbunden wurde.

2. Druckmesseinrichtung gemäß Anspruch 1, **dadurch gekennzeichnet, dass** der Drucksensor (1) mindestens einen auf der von der Diffusionsschweißung (7) abgewandten Seite der Messmembran (3) angeordneten Sensorbestandteil umfasst.

3. Druckmesseinrichtung gemäß Anspruch 1 bis 2, **dadurch gekennzeichnet, dass** der Drucksensor (1) als freistehendes, ausschließlich mittels der Diffusionsschweißung (7) befestigtes Bauteil ausgebildet ist.

4. Druckmesseinrichtung gemäß Anspruch 1 bis 2, **dadurch gekennzeichnet, dass** die Sensor-Befestigung eine auf einer von der Diffusionsschweißung (7) abgewandten Rückseite des Drucksensors (1) angeordnete Sensorabstützung (35) umfasst, die derart ausgebildet ist, dass sie eine rückseitige Abstützung des Drucksensors (1) bewirkt, durch die sich die Druckbeständigkeit der Sensor-Befestigung gegenüber durch die Öffnung (11) hindurch auf die Stirnseite des Drucksensors (1) ausgeübten Druckbelastungen erhöht.

5. Druckmesseinrichtung gemäß Anspruch 1 bis 4, **dadurch gekennzeichnet, dass**
die Messmembran (3) aus einer polykristallinen Keramik, einer polykristallinen Oxidkeramik oder aus polykristallinem Aluminiumoxid (Al₂O₃) besteht, eine Oberflächenrauigkeit von größer gleich 0,1 µm aufweist, eine Membranstärke von 0,05 mm bis 3 mm aufweist, und/oder einen Membrandurchmesser von größer gleich 17 mm aufweist, und/oder
das Befestigungselement (9) aus Titan besteht oder aus einer Titanlegierung besteht, wobei die Titanlegierung an einen an einen thermischen Ausdehnungskoeffizienten der Keramik der Messmembran (3) angepassten thermischen Ausdehnungskoeffizienten aufweist und/oder einen Elastizitätsmodul von 100 GPa bis 120 GPa aufweist.

6. Druckmesseinrichtung gemäß Anspruch 1 bis 5, **dadurch gekennzeichnet, dass**
das Befestigungselement (9) eine Ausnehmung umfasst, die außenseitlich allseitig von einem den Drucksensor (1) außenseitlich allseitig umgebenden, von dem Drucksensor (1) beabstandeten Wandbereich (31) begrenzt ist,
an den Wandbereich (31) endseitig eine sich radial nach innen erstreckende Schulter (33) anschließt, die die Öffnung (11) des Befestigungselements (9) außenseitlich allseitig umgibt, und
der Membranrand (5) der Messmembran (3) mittels der Diffusionsschweißung (7) mit einem von dem Wandbereich (31) beabstandeten, inneren Randbereich der Schulter (33) des Befestigungselements (9) verbunden ist.

7. Druckmesseinrichtung gemäß Anspruch 1 bis 6, **dadurch gekennzeichnet, dass** die Druckmesseinrichtung einen als Bestandteil des Befestigungselements (9) ausgebildeten Prozessanschluss (39) oder einen als separates Bauteil ausgebildeten, mit dem Befestigungselement (9) verbundenen oder mit dem Befestigungselement (9) mittels einer Schweißung verbundenen Prozessanschluss (41) umfasst, mittels dessen die Druckmesseinrichtung auf einem hierzu komplementären Anschluss montierbar und/oder an einen hierzu komplementären Anschluss einer Wirkdruckleitung anschließbar ist.

8. Druckmesseinrichtung gemäß Anspruch 1 bis 7, **dadurch gekennzeichnet, dass** der Drucksensor (1) einen elektromechanischen Wandler umfasst, der dazu ausgestaltet ist, eine vom auf die Messmembran (3) einwirkenden Druck (p) abhängige Durchbiegung der Messmembran (3) in eine elektrische Größe umzuwandeln, anhand derer dann mittels einer an den Wandler angeschlossenen oder anschließbaren Messelektronik (21) der zu messende Druck (p) bestimmbar ist.

9. Druckmesseinrichtung gemäß Anspruch 1 bis 8, **dadurch gekennzeichnet, dass** der Drucksensor (1) einen Grundkörper (13) umfasst, der mittels einer Fügung (17) unter Einschluss einer Druckkammer (15) mit der Messmembran (3) verbunden ist.

10. Verfahren zur Herstellung einer Druckmesseinrichtung gemäß Anspruch 1 bis 9, **dadurch gekennzeichnet, dass**
die Messmembran (3) und das Befestigungselement (9) oder zumindest ein durch die Diffusionsschweißung (7) mit der Messmembran (3) zu verbindender Teil des Befestigungselements (9) als Einzelteile vorgefertigt werden, und
ein Diffusionsschweißverfahren ausgeführt wird, mittels dessen der Membranrand (5) der als Einzelteil vorliegenden Messmembran (3) mit einem damit durch die Diffusionsschweißung (7) zu verbindenden Bereich des Befestigungselements (9) verbunden wird, indem
a) eine Anordnung erzeugt wird, in der der Membranrand (5) und der damit durch die Diffusionsschweißung (7) zu verbindende Bereich des Befestigungselements (9) unmittelbar aufeinander aufliegen, und
b) der Membranrand (5) und der damit zu verbindende Bereich des Befestigungselements (9) unter Vakuum oder unter einer Schutzgasatmosphäre mittels eines Anpressdrucks (pₐ) gegeneinander gepresst werden und unter dem darauf einwirkenden Anpressdruck (pₐ) einem Temperaturprozess unterzogen werden, bei dem die Anordnung auf eine Temperatur erwärmt wird, bei der ein die Diffusionsschweißung (7) bewirkender Diffusionsprozess stattfindet.

11. Verfahren gemäß Anspruch 10, **dadurch gekennzeichnet, dass** die Anordnung während des Diffusionsschweißverfahrens über einen Zeitraum von 60 Minuten bis 120 Minuten unter einem Anpressdruck von 1 MPa bis 10 MPa auf einer Temperatur im Bereich von 1000 °C bis 1400 °C gehalten wird.

12. Verfahren gemäß Anspruch 10 bis 11, **dadurch gekennzeichnet, dass** der Drucksensor (1) im Anschluss an das Diffusionsschweißverfahren durch Hinzufügen mindestens eines auf der von der Diffusionsschweißung (7) abgewandten Seite der Messmembran (3) anzuordnenden Sensorbestandteils vervollständigt wird.

13. Verfahren gemäß Anspruch 12 zur Herstellung einer Druckmesseinrichtung gemäß Anspruch 9, **dadurch gekennzeichnet, dass**
der Grundkörper (13) nach der Ausführung des Diffusionsschweißverfahrens unter Zwischenfügung eines zur Erzeugung der Fügung (17) zwischen Messmembran (3) und Grundkörper (13) benötigten Fügematerials (F) auf der Messmembran (3) angeordnet wird, und
nachfolgend ein Fügeverfahren ausgeführt wird, mittels dessen die Fügung (17) zwischen Grundkörper (13) und Messmembran (3) erzeugt wird.

14. Verfahren gemäß Anspruch 13, **dadurch gekennzeichnet, dass**
der Drucksensor (1) einen kapazitiven elektromechanischen Wandler umfasst,
der Wandler eine auf einer membran-zugewandten Stirnseite des Grundkörpers (13) angeordnete Messelektrode (23) und eine auf einer dem Grundkörper (13) zugewandten Innenseite der Messmembran (9) angeordnete Gegenelektrode (25) umfasst,
die Gegenelektrode (25) auf die Messmembran (3) aufgebracht wird, bevor Messmembran (3) und Grundkörper (13) mittels des Fügeverfahrens miteinander verbunden werden, und
der Grundkörper (13) mit der Messelektrode (23) und für den elektrischen Anschluss des Wandlers an eine Messelektronik (21) benötigten Komponenten ausgestattet wird, bevor der Grundkörper (13) mittels des Fügeverfahrens mit der Messmembran (3) verbunden wird.

## Claims

1. A pressure measuring device comprising
a ceramic pressure sensor (1), which comprises a ceramic measuring membrane (3), and
a sensor securing device, by means of which the pressure sensor (1) is secured such that a medium under a pressure (p) to be measured can be applied to a measuring membrane (3) region surrounded externally on all sides by a membrane edge (5) of the measuring membrane (3),
wherein the sensor securing device has a securing element (9) made of titanium or a titanium alloy, which has an opening (11) through which the medium under the pressure (p) to be measured can be applied to the membrane region,
**characterized in that**
the membrane edge (5) of the measuring membrane (3) is directly connected to the securing element (9) of the sensor securing device by means of a diffusion welding (7),
wherein the diffusion welding (7) is a diffusion welding (7) which is produced using a diffusion welding method and by means of which the measuring membrane (3) provided as an individual part during the diffusion welding method has been connected to the securing element (9).

2. The pressure measuring device as claimed in claim 1, **characterized in that** the pressure sensor (1) comprises at least one sensor component arranged on that side of the measuring membrane (3) facing away from the diffusion welding (7).

3. The pressure measuring device as claimed in claims 1 to 2, **characterized in that** the pressure sensor (1) is configured as a free-standing component secured exclusively by means of the diffusion welding (7).

4. The pressure measuring device as claimed in claims 1 to 2, **characterized in that** the sensor securing device comprises a sensor support (35) arranged on a rear side of the pressure sensor (1) facing away from the diffusion welding (7), which is configured such that it acts on a rear side support of the pressure sensor (1), thus increasing the pressure resistance of the sensor securing device in respect of pressure loads exerted on the front side of the pressure sensor (1) through the opening (11).

5. The pressure measuring device as claimed in claims 1 to 4, **characterized in that**
the measuring membrane (3) consists of a polycrystalline ceramic, a polycrystalline oxide ceramic or of polycrystalline aluminum oxide (Al₂O₃), has a surface roughness of greater than or equal to 0.1 µm, has a membrane thickness of 0.05 mm to 3 mm, and/or has a membrane diameter of greater than or equal to 17 mm, and/or
the securing element (9) consists of titanium or consists of a titanium alloy, wherein the titanium alloy has a coefficient of thermal expansion matched to a coefficient of thermal expansion of the ceramic of the measuring membrane (3) and/or has a modulus of elasticity of 100 GPa to 120 GPa.

6. The pressure measuring device as claimed in claims 1 to 5, **characterized in that**
the securing element (9) comprises a recess which is bounded on the outside on all sides by a wall region (31) surrounding the pressure sensor (1) on the outside on all sides and spaced apart from the pressure sensor (1),
adjoins a radially inwardly extending shoulder (33) at the end of the wall region (31), which shoulder (33) surrounds the opening (11) of the securing element (9) on the outside on all sides, and
the membrane edge (5) of the measuring membrane (3) is connected by means of the diffusion welding (7) to an inner edge region of the shoulder (33) of the securing element (9) spaced apart from the wall region (31).

7. The pressure measuring device as claimed in claims 1 to 6, **characterized in that** the pressure measuring device comprises a process connection (39) configured as a component of the securing element (9) or a process connection (41) configured as a separate component, connected to the securing element (9) or connected to the securing element (9) by means of a weld, by means of which the pressure measuring device can be mounted on a connection complementary thereto and/or can be connected to a connection of a differential pressure line complementary thereto.

8. The pressure measuring device as claimed in claims 1 to 7, **characterized in that** the pressure sensor (1) comprises an electromechanical transducer which is configured to convert a deflection of the measuring membrane (3) that is dependent on the pressure (p) acting on the measuring membrane (3) into an electrical variable by means of which the pressure (p) to be measured can then be determined by means of measuring electronics (21) which are connected or can be connected to the transducer.

9. The pressure measuring device as claimed in claims 1 to 8, **characterized in that** the pressure sensor (1) comprises a base body (13) which is connected to the measuring membrane (3) by means of a joint (17) including a pressure chamber (15).

10. A method for producing a pressure measuring device as claimed in claims 1 to 9, **characterized in that**
the measuring membrane (3) and the securing element (9) or at least a part of the securing element (9) that is to be connected to the measuring membrane (3) through the diffusion welding (7) are prefabricated as individual parts, and
a diffusion welding method is carried out, by means of which the membrane edge (5) of the measuring membrane (3) existing as an individual part is connected to a region of the securing element (9) to be connected thereto through the diffusion welding (7), by
a) an arrangement being produced in which the membrane edge (5) and the region of the securing element (9) to be connected thereto through the diffusion welding (7) lie directly on top of one another, and
b) the membrane edge (5) and the region of the securing element (9) to be connected thereto being pressed against one another under vacuum or under a protective gas atmosphere by means of a compressive pressure (pₐ) and, under the compressive pressure (pₐ) acting thereon, are subjected to a heating process in which the arrangement is heated to a temperature at which a diffusion process bringing about the diffusion welding (7) takes place.

11. The method as claimed in claim 10, **characterized in that**, during the diffusion welding method, the arrangement is kept under a compressive pressure of 1 MPa to 10 MPa at a temperature ranging from 1000°C to 1400°C for a period of 60 minutes to 120 minutes.

12. The method as claimed in claims 10 to 11, **characterized in that**, following the diffusion welding method, the pressure sensor (1) is completed through the addition of at least one sensor component to be arranged on that side of the measuring membrane (3) facing away from the diffusion welding (7).

13. The method as claimed in claim 12 for producing a pressure measuring device as claimed in claim 9, **characterized in that**,
after the diffusion welding method has been carried out, the base body (13) is arranged on the measuring membrane (3) with interposition of a joint material (F) required to produce the joint (17) between measuring membrane (3) and base body (13), and
then a joining method is carried out by means of which the joint (17) between base body (13) and measuring membrane (3) is produced.

14. The method as claimed in claim 13, **characterized in that**
the pressure sensor (1) comprises a capacitive electromechanical transducer,
the transducer comprises a measuring electrode (23) arranged on a membrane-facing front side of the base body (13) and a counter-electrode (25) arranged on an inside of the measuring membrane (9) facing toward the base body (13),
the counter-electrode (25) is mounted onto the measuring membrane (3) before measuring membrane (3) and base body (13) are connected to one another by means of the joining method, and
the base body (13) is equipped with the measuring electrode (23) and components required for the electrical connection of the transducer to measuring electronics (21) before the base body (13) is connected to the measuring membrane (3) by means of the joining method.

## Revendications

1. Dispositif de mesure de pression avec
un capteur de pression céramique (1), lequel capteur comprend une membrane de mesure céramique (3), et
une fixation de capteur, fixation au moyen de laquelle le capteur de pression (1) est fixé de telle sorte qu'une zone de membrane de la membrane de mesure (3), entourée de tous côtés du côté extérieur par un bord de membrane (5) de la membrane de mesure (3), peut être soumise à un produit se trouvant sous une pression (p) à mesurer,
la fixation du capteur comprenant un élément de fixation (9) en titane ou en alliage de titane qui présente une ouverture (11) à travers laquelle la zone de la membrane peut être soumise à l'action du produit soumis à la pression (p) à mesurer,
**caractérisé en ce que** le bord (5) de la membrane de mesure (3) est relié directement à l'élément de fixation (9) de la fixation de capteur au moyen d'une soudure par diffusion (7),
la soudure par diffusion (7) étant une soudure par diffusion (7) produite au moyen d'un procédé de soudage par diffusion, soudure par laquelle la membrane de mesure (3), mise à disposition sous forme de pièce individuelle pendant le procédé de soudage par diffusion, a été reliée à l'élément de fixation (9).

2. Dispositif de mesure de pression selon la revendication 1, **caractérisé en ce que** le capteur de pression (1) comprend au moins un composant de capteur disposé sur le côté de la membrane de mesure (3) opposé à la soudure par diffusion (7).

3. Dispositif de mesure de pression selon la revendication 1 à 2, **caractérisé en ce que** le capteur de pression (1) est réalisé sous la forme d'un composant autonome, fixé exclusivement au moyen de la soudure par diffusion (7)

4. Dispositif de mesure de pression selon la revendication 1 à 2, **caractérisé en ce que** la fixation de capteur comprend un support de capteur (35) disposé sur une face arrière du capteur de pression (1) opposée à la soudure par diffusion (7), lequel support est conçu de telle sorte qu'il provoque un support arrière du capteur de pression (1), grâce auquel la résistance à la pression de la fixation de capteur augmente par rapport à des charges de pression exercées à travers l'ouverture (11) sur la face frontale du capteur de pression (1).

5. Dispositif de mesure de pression selon la revendication 1 à 4, **caractérisé**
**en ce que** la membrane de mesure (3) est constituée d'une céramique polycristalline, d'une céramique d'oxyde polycristallin ou d'oxyde d'aluminium polycristallin (Al₂O₃), présente une rugosité de surface supérieure ou égale à 0,1 µm, présente une épaisseur de membrane de 0,05 mm à 3 mm, et/ou présente un diamètre de membrane supérieur ou égal à 17 mm, et/ou
**en ce que** l'élément de fixation (9) est en titane ou est constitué d'un alliage de titane, l'alliage de titane présentant un coefficient de dilatation thermique adapté à un coefficient de dilatation thermique de la céramique de la membrane de mesure (3) et/ou présentant un module d'élasticité de 100 GPa à 120 GPa.

6. Dispositif de mesure de pression selon la revendication 1 à 6, **caractérisé en ce que**
l'élément de fixation (9) comprend un évidement qui est délimité extérieurement de tous côtés par une zone de paroi (31) entourant extérieurement de tous côtés le capteur de pression (1) et laquelle zone est située à distance du capteur de pression (1),
un épaulement (33) s'étendant radialement vers l'intérieur se raccordant à la zone de paroi (31) à son extrémité, qui entoure de tous côtés, côté extérieur, l'ouverture (11) de l'élément de fixation (9), et
le bord de membrane (5) de la membrane de mesure (3) est relié, au moyen de la soudure par diffusion (7), à une zone de bord intérieure, distante de la zone de paroi (31), de l'épaulement (33) de l'élément de fixation (9).

7. Dispositif de mesure de pression selon la revendication 1 à 6, **caractérisé en ce que** l'appareil de mesure de pression comprend un raccord process (39) réalisé en tant que composant de l'élément de fixation (9) ou un raccord process (41) réalisé en tant que composant séparé, relié à l'élément de fixation (9) ou relié à l'élément de fixation (9) au moyen d'une soudure, raccord process au moyen duquel le dispositif de mesure de pression peut être monté sur un raccord complémentaire à celui-ci et/ou peut être raccordé à un raccord complémentaire à celui-ci d'une conduite de pression active.

8. Dispositif de mesure de pression selon la revendication 1 à 7, **caractérisé en ce que** le capteur de pression (1) comprend un transducteur électromécanique, lequel est conçu pour convertir une flexion de la membrane de mesure (3), qui dépend de la pression (p) agissant sur la membrane de mesure (3), en une grandeur électrique à l'aide de laquelle la pression (p) à mesurer peut ensuite être déterminée au moyen d'une électronique de mesure (21) raccordée ou pouvant être raccordée au transducteur.

9. Dispositif de mesure de pression selon la revendication 1 à 8, **caractérisé en ce que** le capteur de pression (1) comprend un corps de base (13) qui est relié à la membrane de mesure (3) au moyen d'un assemblage (17) en incluant une chambre de pression (15).

10. Procédé destiné à la fabrication d'un dispositif de mesure de pression selon la revendication 1 à 9, **caractérisé en ce que**
la membrane de mesure (3) et l'élément de fixation (9) ou au moins une partie de l'élément de fixation (9) à relier à la membrane de mesure (3) par la soudure par diffusion (7) sont préfabriqués en tant que pièces individuelles, et
un procédé de soudage par diffusion est exécuté, au moyen duquel le bord de membrane (5) de la membrane de mesure (3) se présentant sous forme de pièce individuelle est relié à une zone de l'élément de fixation (9) à relier à celle-ci par la soudure par diffusion (7), **en ce que**
a) on crée un agencement dans lequel le bord de membrane (5) et la zone de l'élément de fixation (9) à relier à celui-ci par la soudure par diffusion (7) reposent directement l'un sur l'autre, et
b) le bord de membrane (5) et la zone de l'élément de fixation (9) à relier à celui-ci sont pressés l'un contre l'autre sous vide ou sous une atmosphère de gaz protecteur au moyen d'une pression d'application (pₐ) et sont soumis à un processus de température sous la pression d'application (pₐ) agissant sur eux, processus au cours duquel l'agencement est chauffé à une température à laquelle a lieu un processus de diffusion provoquant la soudure par diffusion (7).

11. Procédé selon la revendication 10, **caractérisé en ce que** l'agencement est maintenu à une température dans la gamme de 1 000 °C à 1 400 °C pendant une période de 60 minutes à 120 minutes sous une pression d'application de 1 MPa à 10 MPa pendant le procédé de soudage par diffusion.

12. Procédé selon la revendication 10 à 11, **caractérisé en ce que** le capteur de pression (1) est complété, à la suite du procédé de soudage par diffusion, par l'ajout d'au moins un composant de capteur à disposer sur le côté de la membrane de mesure (3) opposé au soudage par diffusion (7).

13. Procédé selon la revendication 12 destiné à la fabrication d'un dispositif de mesure de pression selon la revendication 9, **caractérisé**
**en ce que** le corps de base (13) est disposé sur la membrane de mesure (3) après l'exécution du procédé de soudage par diffusion avec interposition d'un matériau d'assemblage (F) nécessaire pour produire l'assemblage (17) entre la membrane de mesure (3) et le corps de base (13), et
**en ce qu'**on exécute ensuite un procédé d'assemblage au moyen duquel l'assemblage (17) est réalisé entre le corps de base (13) et la membrane de mesure (3).

14. Procédé selon la revendication 13, **caractérisé en ce que**
le capteur de pression (1) comprend un transducteur électromécanique capacitif,
le transducteur comprend une électrode de mesure (23) disposée sur une face frontale du corps de base (13) orientée vers la membrane et une contre-électrode (25) disposée sur une face intérieure de la membrane de mesure (9) orientée vers le corps de base (13),
la contre-électrode (25) est appliquée sur la membrane de mesure (3), avant que la membrane de mesure (3) et le corps de base (13) ne soient reliés l'un à l'autre au moyen du procédé d'assemblage, et
le corps de base (13) est équipé de l'électrode de mesure (23) et des composants nécessaires pour le raccordement électrique du transducteur à une électronique de mesure (21), avant que le corps de base (13) ne soit relié à la membrane de mesure (3) au moyen du procédé d'assemblage.
